**Europäisches Patentamt**

**European Patent Office**

**Office européen des brevets**

(19)

(11) Veröffentlichungsnummer: **0 009 204**
**B1**

(12) **EUROPÄISCHE PATENTSCHRIFT**

(45) Veröffentlichungstag der Patentschrift:
**13.04.83**

(51) Int. Cl.³: **H 04 N 9/50,** H 04 N 9/32

(21) Anmeldenummer: **79103399.6**

(22) Anmeldetag: **12.09.79**

(54) Farbdecoder für einen PAL- oder SECAM- Farbfernsehempfänger.

(30) Priorität: **23.09.78 DE 2841542**
**03.08.79 DE 2931557**

(43) Veröffentlichungstag der Anmeldung:
**02.04.80 Patentblatt 80/7**

(45) Bekanntmachung des Hinweises auf die Patenterteilung:
**13.04.83 Patentblatt 83/15**

(84) Benannte Vertragsstaaten:
**AT BE CH DE FR GB IT LU NL SE**

(56) Entgegenhaltungen:
**DE-A-2 056 276**
**US-A-3 663 746**
**FKTG-Vortrag 20 der 5. Jahrestagung vom 19. bis 23. Sept. 1977 in Kiel, Tagungsband Seiten 177—185.**
**IEEE-Journal of Solid-State Circuits, vol. SC-12, no. 6, Dec. 1977, Seiten 617—625.**

(73) Patentinhaber: **Licentia Patent-Verwaltungs-GmbH,**
**Theodor-Stern-Kai 1, D-6000 Frankfurt/Main 70 (DE)**

(72) Erfinder: **Christiansen, Peter, Dipl.-Ing., Reutlinger Strasse 80, D-7900 Ulm (DE)**
Erfinder: **Kohlbacher, Gerhard, Dipl.-Ing., Im Grund 3, D-7900 Ulm (DE)**

(74) Vertreter: **Einsel, Robert, Dipl.-Ing., Licentia Patent-Verwaltungs-GmbH Theodor-Stern-Kai 1, D-6000 Frankfurt/Main 70 (DE)**

## Farbdecoder für einen PAL- oder SECAM-Farbfernsehempfänger

Die Erfindung betrifft einen Farbdecoder für einen Farbfernsehempfänger, in dem die in Demodulatoren aus dem modulierten Farbträger gewonnenen Farbsignale durch als Ladungsverschiebeschaltung ausgebildete Verzögerungsleitungen um eine Zeilendauer verzögert und aus den verzögerten und unverzögerten Signalen in als Matrix wirkenden Addierstufen die Farbdifferenzsignale gewonnen werden, wobei die Verzögerungsleitungen, die Demodulatoren und die Addierstufen in integrierter Technik auf einem Halbleiterchip ausgebildet sind.

Zur Demodulation des PAL-Farbträgers ist es bekannt, den Farbträger in einer Glas-Ultraschallverzögerungsleitung um eine Zeilendauer zu verzögern und in zwei Addierstufen zu dem verzögerten Farbträger einmal den unverzögerten und zum anderen den um 180° in der Phase gedrehten unverzögerten Farbträger zu addieren. Dadurch ergibt sich eine Signalaufspaltung in die beiden trägerfrequenten Komponenten (R-Y) und (B-Y). Die (B-Y)-Komponente wird in einem ersten Demodulator unter Verwendung des vom Bezugsträgeroszillator erzeugten Bezugsträgers demoduliert, und die (R-Y)-Komponente, deren Phase von Zeile zu Zeile um 180° alterniert, wird in einem zweiten Demodulator unter Verwendung eines um 90° gedrehten und von Zeile zu Zeile um 180° umgeschalteten Bezugsträgers demoduliert. Auf diese Weise entstehen die beiden videofrequenten, über zwei Zeilen gemittelten Farbdifferenzsignale (B-Y)' und (R-Y)'. Diese Art der Decodierung hat den Nachteil, daß eine Glasverzögerungsleitung erforderlich ist, die sich nicht in modernen Halbleiterschaltungen integrieren läßt.

Aus der Zeitschrift Funk-Technik 1971, Nr. 6, Seiten 195 – 198, ist es bekannt, statt einer Glasverzögerungsleitung zwei Eimerkettenschaltungen im PAL-Decoder zu verwenden. Da die Eimerkettenschaltungen Tiefpaßeigenschaften haben, lassen sich mit diesen nur videofrequente Signale verzögern. Daher wird bei dem bekannten Decoder der Farbträger durch zwei Synchrondemodulatoren in die beiden videofrequenten Signale (B-Y) und (R-Y) aufgespalten. Diese Signale werden anschließend in je einer als Schieberegister für Analogsignale ausgebildeten Verzögerungsleitung um eine Zeilendauer verzögert. Durch Addition der beiden unverzögerten, mit den entsprechenden verzögerten Signalen werden jeweils in einer Addierstufe die beiden Farbdifferenzsignale (B-Y)' und (R-Y)' erzeugt. Anschließend werden die beiden Farbdifferenzsignale (B-Y)' und (R-Y)' im vorgegebenen Verhältnis einer weiteren, als Matrix dienenden Addierstufe zugeführt, die daraus das Farbdifferenzsignal (G-Y)' erzeugt. Dieser Decoder hat den Nachteil, daß eine große Anzahl an Bauteilen erforderlich ist.

Es ist auch ein PAL-Decoder bekannt (DE-AS 2 056 276), bei dem jeweils für ein Farbsignal die Verzögerungsleitung als Ladungsverschiebeschaltung ausgebildet und zusammen mit dem Demodulator und der Addierstufe in integrierter Technik auf einem Halbleiterchip ausgebildet ist.

Der Erfindung liegt die Aufgabe zugrunde, einen Decoder der zuletzt beschriebenen Art so weiterzubilden, daß er technologisch besonders einfach integrierbar ist und mit möglichst geringerem Leistungsverbrauch arbeitet.

Diese Aufgabe wird durch die im Anspruch 1 beschriebene Erfindung gelöst. Vorteilhafte Weiterbildungen der Erfindung sind in den Unteransprüchen beschrieben.

Es ist auch bekannt (IEEE Journal, Solid-State Circuits, No. 6, Dezember 1977, Seiten 617 – 625), mit CCD-Ladungsverschiebeschaltungen Signale zu addieren. Dort handelt es sich aber nicht um einen Farbdecoder, sondern um die Realisierung von Tiefpaß-Filtern in CCD-Technik. Eine Synchrondemodulation eines modulierten Farbträgers durch Ladungsverschiebung zu definierten äquidistanten Zeitpunkten wird dort nicht durchgeführt.

Die Erfindung beruht auf der Erkenntnis, daß sich die Schaltungstechnik der Ladungsverschiebeschaltung, die an sich zur Verzögerung von Signalen dient, bei einem Farbdecoder auch für den Aufbau der Demodulatoren und der Addierstufen verwenden läßt. Das ergibt den Vorteil, daß sich die für den Farbdecoder wesentlichen Bauteile, nämlich die Verzögerungsleitungen, die Demodulatoren und die Addierstufen alle in der gleichen Schaltungstechnik ausführen lassen. Dadurch wird die Herstellung eines derartigen Decoders als IC auf einem einzigen Halbleiter-Chip wesentlich vereinfacht. Wegen der einheitlichen Schaltungstechnik für alle diese Stufen läßt sich das IC technologisch besonders vorteilhaft herstellen. Da die Schaltungsteile nur wenig Leistung verbrauchen, können weitere Bauteile wie Verstärker, Impulsformer, Frequenzwandler und/oder Inverter auf dem gleichen Halbleiter-Chip, das vorteilhafterweise in MOS-Technologie realisiert wird, untergebracht werden. Dadurch sind nur wenig äußere Anschlüsse für einen solchen integrierten Baustein erforderlich. Der erfindungsgemäße Decoder ist sowohl für die Decodierung eines PAL-Farbträgers als auch eines SECAM-Farbträgers anwendbar.

Der Decoder läßt sich als Ladungsverschiebeschaltung in vorteilhafter Weise so ausbilden, daß sie eine einzige Einheit bildet. Hierfür ist besonders die CCD-Technik (Charged-Coupled-Device-Technik) geeignet. Durch besondere Gestaltung der Eingangselektrode dieser Ladungsverschiebeschaltung läßt sich diese nicht nur zum Abtasten von Signalen, wie es bei der Erfindung im Synchrondemodulator geschieht, verwenden, sondern auch zur ungewichteten und gewichteten Addition von Eingangssignalen. Wird z. B. die Eingangselektrode in zwei gleich große Elektroden aufgeteilt, so ist eine derartige Addierstufe zum Addieren eines unverzögerten und eines verzögerten Signals geeignet. Die Stufe kann dann beispielsweise aus dem Signal (B-Y) bei Verwendung einer vorgeschalteten Verzögerungsleitung ein phasengemitteltes Farbdifferenzsignal (B-Y)' erzeugen. Wird jedoch die Eingangselektrode nach Maßgabe der Verhältnisse der Farbdifferenzsignale im Grausignal aufgeteilt, so läßt sich eine derartige Ladungsverschiebeschaltung als als Matrix wirkende Addierstufe zur Erzeugung des Signals (G-Y) aus den Signalen (B-Y) und (R-Y) verwenden. Derartige Addierstufen und Synchrondemodulatoren haben nur wenige Taktelektroden. Da sie mit Ausnahme der Eingangselektrode in der gleichen Weise aufgebaut sind wie die CCD-Verzögerungsleitungen, läßt sich der Baustein einfach und damit preisgünstig herstellen.

Bei der Ausführungsform der Erfindung nach Anspruch 3 ist die als Matrix dienende Addierstufe in der Lage, Farbdifferenzsignale im genormten Verhältnis zusammenzuführen, um das Farbdifferenzsignal (G-Y)' zu bilden.

Die Farbträgerfrequenz eines Farbfernsehempfängers liegt bei etwa 4 MHz und die obere Grenzfrequenz des videofrequenten Farbsignals bei 1 MHz. Nach dem Abtasttheoren ist es möglich, als Abtastfrequenz die doppelte obere Grenzfrequenz des abzutastenden Signals zu wählen. Von dieser Möglichkeit wird bei dem erfindungsgemäßen Decoder Gebrauch gemacht, indem' in vorteilhafter Weise als Abtastfrequenz der Ladungsverschiebeschaltung die halbe Farbträgerfrequenz vorgesehen ist. Ohne Qualitätsverlust hat diese Abtastfrequenzreduzierung den Vorteil, daß der Leistungsverbrauch in der Ladungsverschiebeschaltung merklich verringert ist und in Folge der geringeren Verlustleistung eine höhere Bauteildichte auf dem Halbleiter-Chip möglich wird.

Ausführungsbeispiele der Erfindung werden im folgenden anhand der Zeichnung erläutert. Darin zeigt

Fig. 1 ein Blockschaltbild eines erfindungsgemäßen Decoders,

Fig. 2 Abmessungen der Elektroden einer CCD-Addierstufe für gleichgewichtete Sumanden,

Fig. 3 Abmessungen der Elektroden einer als Matrix dienenden CCD-Addierstufe für ungleichgewichtete Sumanden,

Fig. 4 ein Ausführungsbeispiel gemäß einer Weiterbildung der Erfindung, bei dem eine besonders kurze Laufzeit im Farbdecoder erreicht wird,

Fig. 5 Kurven zur Erläuterung der Wirkungsweise des Decoders nach Fig. 4,

Fig. 6 die Schaltung der Addierstufe zur Gewinnung des Signals (G-Y)' und

Fig. 7, 8, 9 Diagramme zur Erläuterung unterschiedlicher Takte bei der Ladungsverschiebung und der dabei auftretenden Taktfrequenzen in dem Ausführungsbeispiel nach Fig. 4.

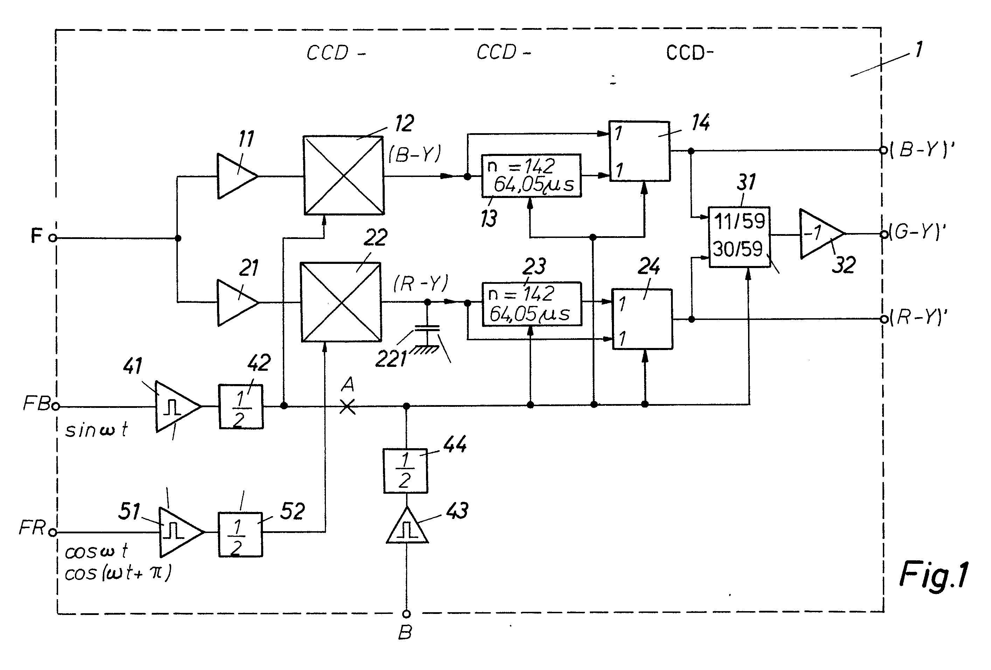

In Fig. 1 befinden sich alle in dem gestrichelten Kasten 1 dargestellten Schaltungsteile auf einem einzigen Halbleiter-Chip, beispielsweise auf einem Silizium-Substrat vom P-Typ. Die Bauteile sind alle in MOS-Technologie realisiert.

Der Decoder dient zur Erzeugung der Farbdifferenzsignale (B-Y)', (R-Y)' und (G-Y)' aus dem empfangenen modulierten Farbträger F. Der Farbträger F wird in zwei Synchrondemodulatoren 12, 22 mit jeweils vorgeschaltetem Verstärker 11 bzw. 21 demoduliert, wodurch die beiden videofrequenten Farbsignale (B-Y) und (R-Y) entstehen. Jedes der beiden Farbsignale wird anschließend in einer Verzögerungsleitung 13 bzw. 23 um eine Zeilendauer, d. h. etwa 64 µs, verzögert. Die beiden unverzögerten und jeweils entsprechenden verzögerten Signale werden in einer Addierstufe 14 bzw. 24 addiert, so daß als Ergebnis dieser Addition die beiden Farbdifferenzsignale (B-Y)' und (R-Y)' am Ausgang der Addierstufe 14 und 24 abgenommen werden können. Die beiden Farbdifferenzsignale werden außerdem einer als Matrix dienenden Addierstufe 31 zugeführt, die die beiden Farbdifferenzsignale entsprechend der Farbfernsehnorm gewichtet addiert und dadurch an ihrem Ausgang das Farbdifferenzsignal −(G-Y)' erzeugt. Ein Inverter 32 erzeugt die richtige Polarität für das Farbdifferenzsignal (G-Y)'.

Die Synchrondemodulatoren 12, 22, die Verzögerungsleitungen 13, 23, die Addierstufen 14, 24 und die als Matrix dienende Addierstufe 31 sind als Ladungsverschiebeschaltung ausgebildet. Der Ladungsverschiebetakt wird aus dem im Empfänger erzeugten Bezugsträger gewonnen.

Bei der Verwendung des Decoders als PAL-Decoder wird dem Eingang FB der örtlich erzeugte Bezugsträger mit der Frequenz von 4,43361875 MHz zur Gewinnung des Farbdifferenzsignals (B-Y) zugeführt. Da die (R-Y)-Komponente des Farbträgers von Zeile zu Zeile um 180° umgeschaltet ist, ist ein weiterer Eingang FR vorgesehen, dem der um 90° phasenverschobene und von Zeile zu Zeile in der Phase um 180° umgeschaltete Bezugsträger zugeführt wird. In den Impulsformern 41 und 51 wird aus jeder Periode des jeweiligen Bezugsträgers ein Impuls erzeugt. Die Anzahl dieser Impulse pro Zeiteinheit wird in einem Frequenzteiler 42 bzw. 52 halbiert. Die so gewonnenen Impulse haben daher die halbe Farbträgerfrequenz.

Die Impulsfolge des nicht alternierenden Bezugsträgers, im folgenden als erste Impulsfolge bezeichnet, wird zur Abtastung des modulierten Farbträgers im CCD-Synchrondemodulator 12 verwendet. Durch diese Abtastung entsteht am Ausgang des Synchrondemodulators 12 das Farbsignal (B-Y).

Die Impulsfolge des alternierenden Bezugsträgers, im folgenden als zweite Impulsfolge bezeichnet, hat gegenüber der ersten Impulsfolge für die Dauer einer Zeile die Phasenverschiebung 90° bzw. 270° und tastet daher im Synchrondemodulator 22 die (R-Y)-Komponente des modulierten Farbträgers ab.

Um nun für die weitere Signalverarbeitung die gleiche Impulsfolge zur Ladungsverschiebung verwenden zu können, ist zwischen dem Synchrondemodulator 22 und der Verzögerungsleitung 23 ein als Kondensator ausbildbarer Zwischenspeicher 221 geschaltet, der das am Ausgang des Synchrondemodulators 22 abgegebene Signal für die Dauer von etwa einer µs hält, so daß mit dem Takt der ersten Impulsfolge die Signalamplituden in den Eingang der Verzögerungsleitung 23 und der Addierstufe 24 eingelesen werden können. Hierzu ist es zweckmäßig, den Ausgang des Synchrondemodulators 22 als Sourcefolger auszubilden. Sämtliche nachfolgenden Ladungsverschiebeschaltungen 23, 24, 31 können mit dem Takt der ersten Impulsfolge betrieben werden.

Zur Verzögerung der Signale um eine Zeilendauer müssen die Verzögerungsleitungen 13, 23 in Folge der Abtastfrequenz $f_A = F/2$, wobei F = Farbträgerfrequenz, jeweils 142 Stufen aufweisen. Die Realisierung der Verzögerungsleitungen als CCD-Schieberegister ist beispielsweise beschrieben in dem Journal Vac. Sci. Technol., Vol. 9, No. 4 (1972), Seiten 1166 − 1181.

Gemäß einer Ausführungsform der Erfindung haben die Addierstufen 14, 24, 31 geteilte Eingangselektroden, deren Teilungsverhältnis der Signalgewichtung der zu addierenden Signale entspricht.

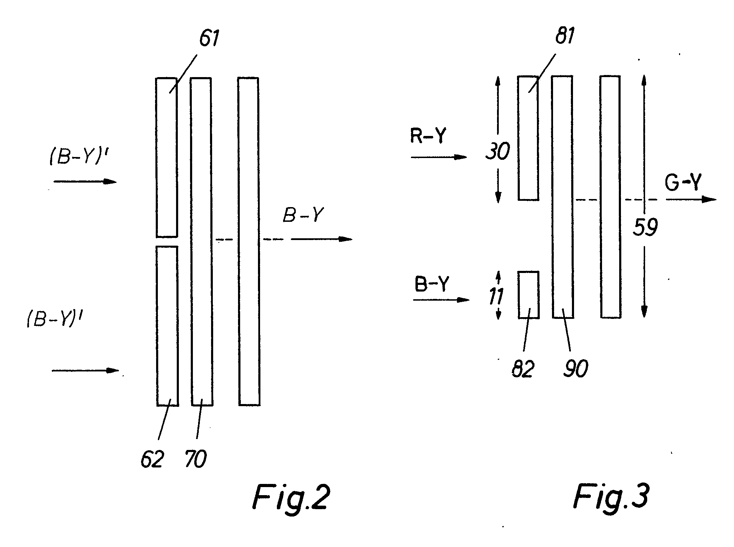

Wie Fig. 2 zeigt, sind die Eingangselektroden der Addierstufen 14 und 24 in zwei gleich große Elektroden 61 und 62 aufgeteilt, während die darauffolgende Taktelektrode 70 und folgende ungeteilt sind und somit die Summe der Ladungen der Eingangselektroden übernehmen.

Die als Matrix dienende Addierstufe 31 dagegen hat die Farbdifferenzsignale (B-Y) und (R-Y) im Verhältnis 11 : 30 zu addieren und das Summensignal auf 41/59 zu reduzieren. Gemäß der Erfindung wird das dadurch erreicht, daß gemäß Fig. 3 die Eingangselektrode der Addierstufe 31 in zwei Teile geteilt ist. Der eine Teil, dem das (B-Y)-Signal zugeführt wird, ist 11/59, und der andere Teil, dem das (R-Y)-Signal zugeführt wird, ist 30/59 der Länge einer Taktelektrode 90 der Addierstufe 31.

Diese Technik der geteilten Elektroden ist auch mit Vorteil am Ausgang der CCD-Schaltungen anwendbar. Wenn die Ausgangselektrode des Synchrondemodulators 12 in zwei gleich große Teile geteilt wird, so ist der eine Teil direkt mit der einen geteilten Eingangselektrode der Addierstufe 14 und der andere direkt mit der Eingangselektrode der Verzögerungsleitung 13 verbunden.

Wenn die Ausgangselektrode der Addierstufe 14 in zwei Teile geteilt ist, so kann von dem einen Teil das Farbdifferenzsignal (B-Y)' zum Ausgang des Bausteins 1 geführt werden, und der andere Teil kann ein Teil der Eingangselektroden der Addierstufe 31 sein. Entsprechendes gilt für die Ankopplung der Addierstufe 24 an die Addierstufe 31. Es ist ersichtlich, daß die Ladungsverschiebeschaltungen des in Fig. 1 dargestellten Decoders als eine Einheit ausgebildet werden können und somit raumsparend integrierbar sind.

Der beschriebene Decoder läßt sich auch als SECAM-Decoder aufbauen. Hierzu wird dem Eingang F in Fig. 1 der modulierte SECAM-Farbträger und den Eingängen FB und FR von Zeile zu Zeile alternierend der Farbträger eingespeist. Ferner ist am Ausgang des Frequenzhalbierers 42 am Punkt A die Leitung zu trennen und dort die halbe, aus dem Farbträger gewonnene Abtastfrequenz als Schiebeimpulse für die Verzögerungsleitungen 13 und 23 und die Addierstufen 14, 24, 31 zuzuführen. Der hierzu erforderliche Impulsformer 43 und der Frequenzhalbierer 44 können, wie Fig. 1 zeigt, ebenfalls auf dem Halbleiter-Chip 1 mit integriert werden, so daß eine kontinuierliche Farbträgerfrequenz dann dem Eingang B zuzuführen ist.

Beim Auftrennen der Leitung im Punkt A ist also der Decoder für SECAM über die Anschlüsse F, FB, FR und B anzusteuern, für PAL über die Anschlüsse F, FB und FR, wobei der Anschluß B mit dem Anschluß FB zu verbinden ist.

Infolge der Ausbildung der Addierstufe 31 als Ladungsverschiebeschaltung hat das durch eine zusätzliche Summierung entstandene Signal (G-Y)' eine geringe Phasenverschiebung gegenüber den beiden anderen Farbdifferenzsignalen. Gemäß einer Weiterbildung der Erfindung ist daher vorgesehen, die Taktleitungen der Addierer 14 und 24 um die gleiche Anzahl Taktleitungen, wie sie die Addierstufe 31 aufweist, zu erhöhen, so daß die Anschlüsse für die Eingänge der Addierstufe 31 Abgriffe der Addierstufen 14, 24 bilden. Phasenverschiebungen zwischen dem von Decoder abgegebenen Farbdifferenzsignalen werden vermieden.

Bei dem beschriebenen Decoder kann noch folgender Nachteil auftreten. In einem Farbfernsehempfänger ist bekanntlich der Farbkanal schmalbandiger als der Leuchtdichtekanal. Das bedeutet, daß die Laufzeit des Signals im Farbkanal größer ist als die Laufzeit im Leuchtdichtekanal. Da die Signale aus dem Farbkanal und dem Leuchtdichtekanal spätestens an der Bildröhre wieder in ihrer richtigen zeitlichen Lage zusammentreffen müssen, muß in einem Farbfernsehempfänger im Weg des Leuchtdichtekanals eine zusätzliche Verzögerung eingeführt werden. Diese wird in der Praxis meist durch eine Verzögerungsleitung bewirkt, die aus einer im Längsweg liegenden Induktivität mit verteilten Querkapazitäten besteht. Eine solche Verzögerungsleitung ist z. B. beschrieben in der DE-PS 1 204 349. Die Verzögerungszeit im Leuchtdichtekanal zum Ausgleich der längeren Laufzeit der Signale im Farbkanal liegt heute in der Größenordnung von 500 ns.

Wenn jetzt in dem Farbdecoder die Demodulation und die Addition durch eine Ladungsverschiebung erfolgen, so wird für diese Ladungsverschiebung eine zusätzliche Zeit benötigt. Das bedeutet zunächst, daß die im Weg des Farbdecoders wirksame Verzögerungszeit gegenüber herkömmlichen Farbdecodern erhöht wird. Deshalb müßte auch die im Weg des Leuchtdichtesignals vorhandene Verzögerung dementsprechend erhöht werden.

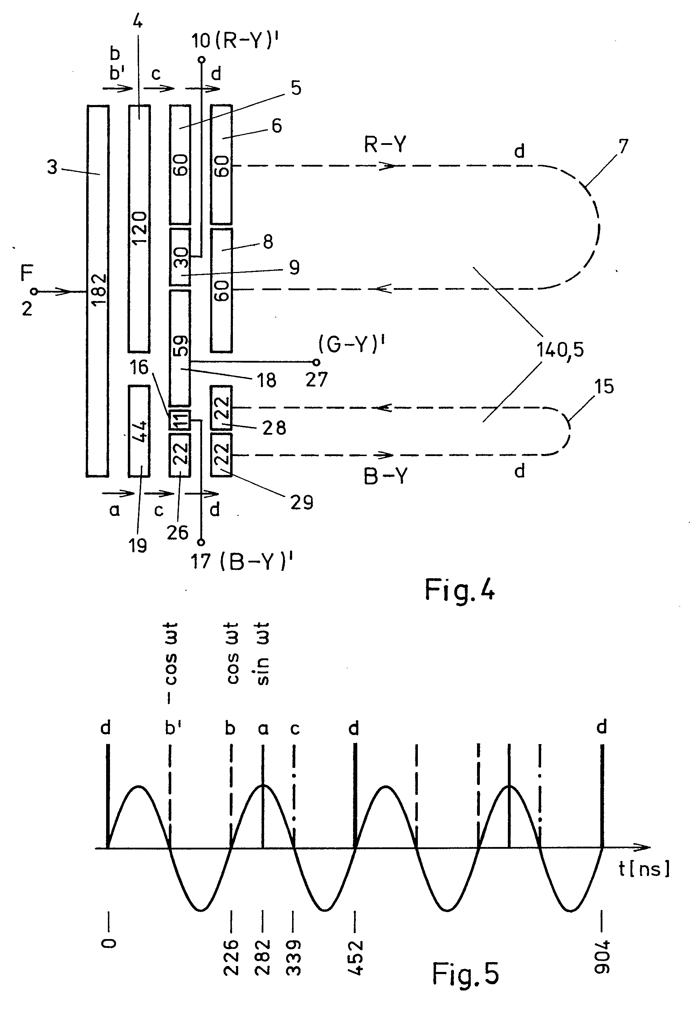

Die Fig. 4—9 zeigen ein Ausführungsbeispiel des Decoders, bei dem die genannte auftretende Verzögerung möglichst klein gehalten ist. In diesem Ausführungsbeispiel wird durch eine besonders geschickte Anordnung der Elektroden zueinander, insbesondere hinsichtlich der Demodulator- und Addierfunktion, die bei diesen Funktionen entstehende Laufzeit des Signals minimal gehalten. Das Signal gelangt also möglichst schnell einmal direkt und einmal um eine Zeilendauer verzögert an die Stelle, wo letztlich die Bildung der Farbdifferenzsignale zur Steuerung der Bildröhre erfolgt. Die Verzögerung um Zeilendauer bleibt dabei bestehen, da diese ja für die Mittelwertbildung in einem PAL-Decoder erwünscht ist.

In Fig. 4 stellen die Rechtecke Elektroden auf einem Halbleiter-Chip dar, unter denen sich jeweils die Ladungen befinden und zwischen denen die Ladungsverschiebung erfolgt. Die in den Rechtecken dargestellten Zahlen deuten die Längenverhältnisse dieser Elektroden an. Die kleinen Buchstaben a—d in Fig. 4, 5 bezeichnen die Vorgänge der Ladungsverschiebung. In Fig. 5 sind diese Vorgänge an der Sinuskurve des nicht modulierten Farbträgers, d. h. des örtlich erzeugten Bezugsträgers konstanter Frequenz und Phase, dargestellt. Es handelt sich dabei um die genormte Farbträgerfrequenz von 4,43316875 MHz, was einer Periodendauer des Farbträgers von etwa 226 ns entspricht.

Im folgenden werden an Hand der Fig. 4, 5 die einzelnen Funktionen des PAL-Decoders durch Ladungsverschiebung beschrieben.

### 1. (R-Y)-Demodulation

Der modulierte Farbträger F gelangt von der Klemme 2 auf die Elektrode 3. Zum Zeitpunkt b, der dem Maximum der Funktion cos $\omega$t entspricht, wird die Ladung von der Elektrode 3 zur Elektrode 4 geschoben, wie in Fig. 4 und 5 durch den Pfeil b angedeutet. Da dieses praktisch einer Abtastung des modulierten Farbträgers in einem bestimmten Zeitpunkt entspricht, entsteht dadurch eine Synchrondemodulation nach der Achse R-Y. Unter der Elektrode 4 entstehen also Ladungen, deren Wert dem Wert des (R-Y)-Signals entspricht. Diese Ladungsverschiebung erfolgt gemäß Fig. 5 in äquidistanten Zeitpunkten, nämlich jeweils zum Zeitpunkt b. Wie ersichtlich, wird nur jede zweite Farbträgerperiode abgetastet. Das reicht aus, weil die Farbträgerfrequenz 4,4 MHz, die Grenzfrequenz der Farbsignale jedoch nur etwa 1 MHz beträgt.

### 2. Einkopplung in die Verzögerungsleitung

Zum Zeitpunkt c wird die unter der Elektrode 4 befindliche Ladung zur Hälfte zur Elektrode 5 geschoben. Diese Elektrode 5 bildet gleichzeitig die Eingangselektrode der Verzögerungsleitung. Auf die Elektrode 5 folgt eine Vielzahl weiterer gleicher Elektroden 6, die entlang des Weges 7 angeordnet sind. Die Richtungsumkehr in der Ladungsverschieberichtung am rechten Ende des Weges 7 kann auf einem Halbleiter-Chip durch geeignete Anordnung der Elektroden oder durch eine Umlenkdiffusion erreicht werden. Die Elektrode 8 ist die letzte Elektrode der durch die Vielzahl der Elektroden 6 entlang des Weges 7 gebildeten Verzögerungsleitung für eine Zeilendauer. An der Elektrode 4 steht also jetzt das demodulierte (R-Y)-Signal und an der Elektrode 8 das um Zeilendauer verzögerte demodulierte (R-Y)-Signal. Die Ladungsverschiebung von einer Elektrode zur nächsten auf dem Weg 7, im ganzen gesehen also von der Elektrode 6 zur Elektrode 8, erfolgt jeweils zu den Zeitpunkten d und beispielsweise bei 2-Phasenbetrieb d+226 ns. Die Stufenzahl ist entsprechend so gewählt, daß die gewünschte Verzögerung um Zeilendauer erreicht wird.

### 3. Mittelung des unverzögerten und des verzögerten (R-Y)-Signals

Zwischen den Elektroden 4 und 8 befindet sich die Elektrode 9. Durch die angelegte Taktfrequenz zwischen den einzelnen Elektroden gelangt jetzt einerseits 1/4 der Ladung von der Elektrode 4 zur Elektrode 9, d. h., das unverzögerte (R-Y)-Signal. Andererseits gelangt die Hälfte der Ladung von der Elektrode 8 durch die angelegte Taktfrequenz zur Elektrode 9, d. h., das um Zeilendauer verzögerte (R-Y)-Signal. An der Elektrode 9 findet also die PAL-Mittelung zwischen dem unverzögerten und dem verzögerten (R-Y)-Signal statt, so daß an der Klemme 10 das über zwei Zeilen gemittelte Signal (R-Y)′ zur Verfügung steht.

### 4. Berücksichtigung der PAL-Umschaltung

Bekanntlich ist die (R-Y)-Achse des Farbträgers F an der Klemme 2 von Zeile zu Zeile um 180° umgeschaltet. Dieses muß bei der Synchrondemodulation berücksichtigt werden. Deshalb erfolgt die Ladungsverschiebung b in jeder zweiten Zeile um 180° der Farbträgerperiode versetzt, wie in Fig. 5 durch b' angedeutet ist. Die Zeitpunkte der Ladungsverschiebung sind also von Zeile zu Zeile zwischen b und b' umgeschaltet. Der Zeitraum zwischen der Ladungsverschiebung b und der darauf folgenden Ladungsverschiebung c ist also von Zeile zu Zeile unterschiedlich lang.

## 5. (B-Y)-Demodulation

Die Demodulation des Farbträgers F an der Klemme 2 in Form der Ladung unter der Elektrode 3 erfolgt durch Ladungsverschiebung im Zeitpunkt a, d. h. entsprechend der Quadraturmodulation des Farbträgers um 90° der Farbträgerperiode gegenüber b versetzt. Das entspricht einer Synchrondemodulation des modulierten Farbträgers nach der Achse (B-Y). Die Weiterverschiebung erfolgt wie oben beschrieben zum Zeitpunkt c. Die übrigen Vorgänge sind vergleichbar mit der (R-Y)-Demodulation. Das demodulierte (B-Y)-Signal läuft entsprechend entlang des Weges 15. Der Elektrodenaufbau ist also für das Signal R-Y und B-Y symmetrisch, wobei lediglich die Länge der Elektroden entsprechend der Amplitudenbewertung dieser Signale in der dargestellten Weise unterschiedlich bemessen sind. Bei der (B-Y)-Demodulation braucht die PAL-Umschaltung nicht berücksichtigt zu werden, da die (B-Y)-Achse konstant ist. Deshalb erfolgt die Ladungsverschiebung a immer im selben Zeitpunkt relativ zur Farbträgerperiode. So wie an der Elektrode 9 das gemittelte (R-Y)-Signal entsteht, entsteht an der Elektrode 16 das über zwei Zeilen gemittelte Signal (B-Y)', das an der Klemme 17 entnommen werden kann.

## 6. Gewinnung des (G-Y)-Signals

Bei bekannten Schaltungen wird das (G-Y)-Signal durch Matrixierung aus den Signalen an den Klemmen 10, 17 in Fig. 4 gewonnen. In dem Decoder gemäß Fig. 4 wird das (G-Y)-Signal jedoch auf andere Weise gewonnen. Das (G-Y)-Signal entsteht an der Elektrode 18. Diese empfängt oben links von der Elektrode 4 das unverzögerte Signal (R-Y), oben rechts von der Elektrode 8 das verzögerte Signal (R-Y), unten links von der Elektrode 19 das unverzögerte Signal (B-Y) und oben rechts von der letzten Elektrode des Verzögerungsweges 15 das verzögerte Signal (B-Y). Die Gewinnung des Signals (G-Y)' erfolgt also im Gegensatz zu bekannten Schaltungen nach der folgenden Gleichung

$$(G-Y)' = -\left[\frac{30}{59} \cdot \frac{1}{2} \cdot (R-Y)^{\cdot}_{n+1} + \frac{30}{59} \cdot \frac{1}{2} \cdot (R-Y)^{\cdot}_{n} + \frac{11}{59} \cdot \frac{1}{2} \cdot (B-Y)^{\cdot}_{n+1} \right.$$
$$\left. + \frac{11}{59} \cdot \frac{1}{2} \cdot (B-Y)^{\cdot}_{n} \right]$$

Die angegebenen Amplitudenfaktoren sind durch die in Fig. 4 angedeutete Längenbemessung der einzelnen Elektroden berücksichtigt.

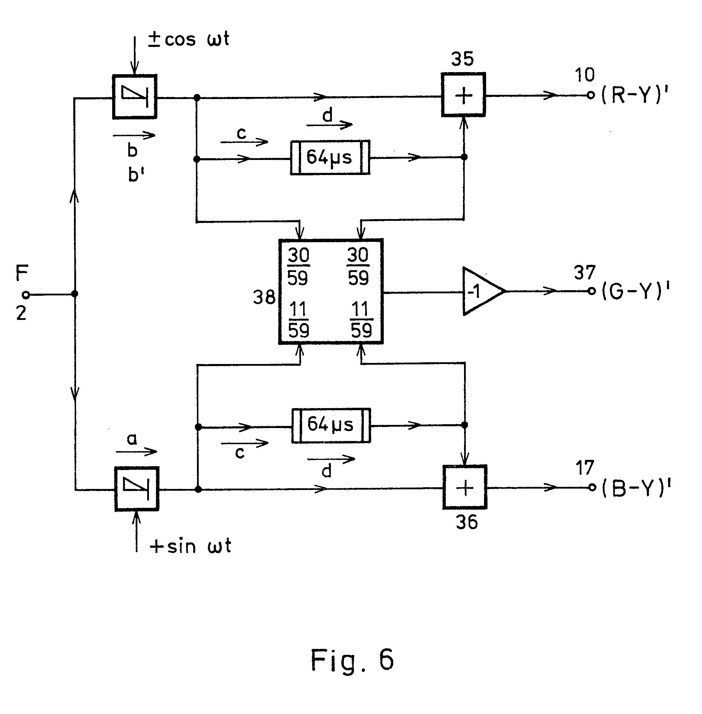

Fig. 6 zeigt das Blockschaltbild für den Decoder nach Fig. 4 und insbesondere die neuartige Gewinnung des (G-Y)'-Signals. Die Zuordnung der Ladungsverschiebungen in Fig. 4 zum Blockschaltbild in Fig. 6 sind wieder durch die Pfeile a – d dargestellt. Die Addierstufe 35 entspricht der Elektrode 9 in Fig. 4 und die Addierstufe 36 der Elektrode 16 in Fig. 4. Es ist ersichtlich, daß das (G-Y)'-Signal aus insgesamt vier Signalen, nämlich jeweils aus dem Eingangssignal und dem Ausgangssignal der beiden Verzögerungsleitungen gewonnen wird. Dieses ist durch die Addierstufe 38 angedeutet, deren vier Eingänge entsprechend in der Amplitude bewertet sind. Die vier Eingänge werden also durch die Elektroden 4, 8, 19 und 28 und der Ausgang durch die Elektrode 18 in Fig. 4 gebildet.

Es ist ersichtlich, daß durch die Anordnung der Elektroden gemäß Fig. 4 ein denkbar schneller Transport der Ladungen ohne vermeidbare Umwege oder Verzögerungen erfolgt. Die Ladungen werden also mit denkbar geringer Verzögerung jeweils zu der nächsten Elektrode transportiert, um auf diese Weise mit möglichst geringer Verzögerung die drei Signale (R-Y)', (B-Y)' und (G-Y)' zu gewinnen.

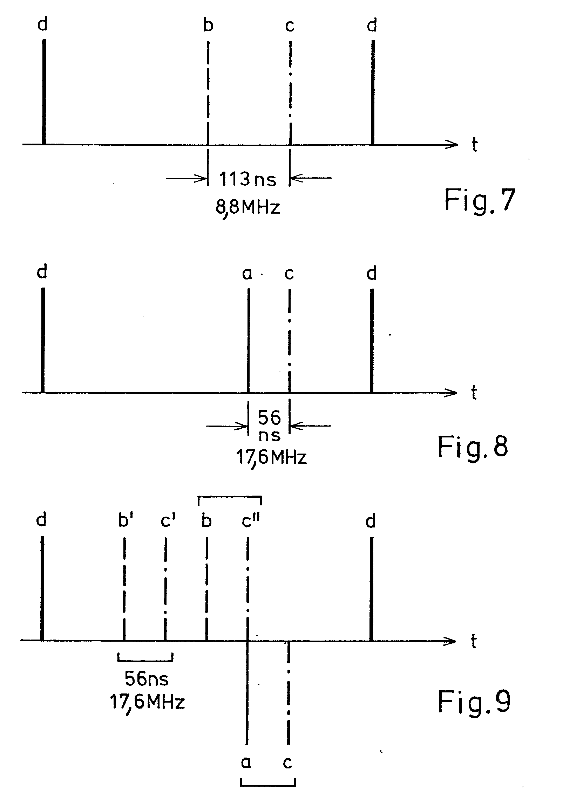

Fig. 7 zeigt einen Auszug aus Fig. 5, und zwar die Ladungsverschiebungen für die (R-Y)-Demodulation für den Fall b entsprechend +cos ωt. Die maximal im Signalweg auftretende Verzögerungszeit zwischen der Ladungsverschiebung zur Synchrondemodulation und der Ladungsverschiebung in die Verzögerungsleitung hinein beträgt hier 113 ns. Das entspricht einer Taktfrequenz von 8,8 MHz. Der Takt d für die Verzögerung um Zeilendauer beträgt 2,2 MHz. Die dargestellten Buchstaben b, c, d entsprechen wieder den in Fig. 4 angedeuteten Ladungsverschiebungen zwischen den Elektroden.

Fig. 8 zeigt als Auszug aus Fig. 5 die Ladungsverschiebungen für die (B-Y)-Demodulation. Hierbei ist die maximale Verzögerungszeit nur 56 ns, was einer Taktfrequenz von 17,6 MHz entspricht. Die an sich zu verschiedenen Zeitpunkten b und a verschobenen Ladungen werden also jeweils zu gleichen Zeitpunkten c weitergeschoben. Wenn die Taktfrequenz von 17,6 MHz praktisch realisierbar ist, bleibt an sich in Fig. 7 die Ladung zwischen den Zeitpunkten b und c unnötig lange unter einer Elektrode bestehen.

Fig. 9 zeigt einen Takt für eine Ladungsverschiebung, bei der jede verschobene Ladung individuell mit der Taktfrequenz von 17,6 MHz schnellstens weitergeschoben wird. Insgesamt treten in der Schaltung nach Fig. 4 und 5 bei der Synchrondemodulation Ladungsverschiebungen a, b, b' zu drei verschiedenen Zeitpunkten auf. In Fig. 7, 8 wurde für diese drei Ladungsverschiebungen zu unterschiedlichen Zeitpunkten die darauffolgende Ladungsverschiebung c immer im selben Zeitpunkt relativ zur Farbträgerperiode durchgeführt. In Fig. 9 erfolgt die letztgenannte Ladungsverschiebung c individuell unmittelbar im Abstand von 56 ns nach jeder der einzelnen Ladungsverschiebungen b', b und a. Durch die eckigen Klammern ist jeweils die Zusammengehörigkeit zwischen den beiden Ladungsverschiebungen angedeutet. Die im Zeitpunkt b' in Fig. 5 von der Elektrode 3 zur Elektrode 4 verschobene Ladung wird also nicht wie in Fig. 5 erst zum Zeitpunkt c zur Elektrode 5 weitergeschoben, sondern schon im Zeitpunkt c' unmittelbar nach der Ladungsverschiebung b', soweit die Höhe der dann auftretenden Taktfrequenzen dieses erlaubt.

Wegen der Aufsummierung jeweils der Signale der Zeile n und der Zeile n+1 mit genau einem Verzögerungstakt-Abstand ist die eigentliche Verzögerungsleitung nur noch 140,5 Stufen lang statt 141,5. Es kommt noch hinzu im Minimalfall 1/4 Verzögerungstakt, d. h., der Abstand von d zu c, d. h. zum Beispiel die Ladungsverschiebung von der Elektrode 5 zur Elektrode 6. Dadurch ergibt sich eine Gesamtverzögerungszeit von

$$\frac{141,75 \cdot 1}{1/2 \cdot 4,43317 \text{ MHz}} = 63,949 \,\mu\text{s}.$$

## Patentansprüche

1. Farbdecoder für einen PAL- oder SECAM-Farbfernsehempfänger, in dem die in Demodulatoren (12, 22) aus dem modulierten Farbträger (F) gewonnenen Farbsignale (B-Y, R-Y) durch als Ladungsverschiebeschaltung ausgebildete Verzögerungsleitungen (13, 23) um eine Zeilendauer verzögert und aus den verzögerten und unverzögerten Signalen in als Matrix wirkenden Addierstufen (14, 24) die Farbdifferenzsignale [(B-Y)', (R-Y)'] gewonnen werden, wobei die Verzögerungsleitungen (13, 23) die Demodulatoren (12, 22) und die Addierstufen (14, 24) in integrierter Technik auf einem Halbleiter-Chip ausgebildet sind, dadurch gekennzeichnet, daß außer den Verzögerungsleitungen (13, 23) auch die Synchrondemodulatoren (12, 22) und die Addierstufen (14, 24) als Ladungsverschiebeschaltung ausgebildet sind, daß für die Synchrondemodulation (12, 22) zu definierten äquidistanten Zeitpunkten (a, b) die Ladung des modulierten Farbträgers (F) abgetastet und von einer Elektrode (3) auf andere zweite Elektroden (4, 19) verschoben wird (Fig. 4), so daß unter der entsprechenden zweiten Elektrode (4, 19) eine dem (R-Y)- bzw. dem (B-Y)-Signal entsprechende Ladung entsteht, und daß für die Addition die beiden Signale zwei getrennten Elektroden (61, 62) zugeführt und von diesen Elektroden auf eine gemeinsame dritte Elektrode (70) verschoben werden (Fig. 2).

2. Decoder nach Anspruch 1, dadurch gekennzeichnet, daß die Ladungsverschiebeschaltung in CCD-Technik als eine Einheit ausgebildet ist, wobei die jeweilige Eingangselektrode der zwei Addierstufen (14, 24) zur Eingabe der jeweiligen unverzögerten und der verzögerten Signale (B-Y) bzw. (R-Y) in gleichem Verhältnis in zwei gleich große Elektroden (61, 62) und die Eingangselektrode der als (G-Y)-Matrix dienenden dritten Addierstufe (31) zur Eingabe der Farbdifferenzsignale (B-Y) und (R-Y) im vorgegebenen Verhältnis in zwei, dem vorgegebenen Verhältnis entsprechend große Elektroden (81, 82) aufgeteilt ist.

3. Decoder nach Anspruch 2, dadurch gekennzeichnet, daß die Länge der aufgeteilten Eingangselektroden der dritten Addierstufe (31) sich wie 11/59 zu 30/59 verhalten und ihr Abstand 18/59 der Länge der übrigen Taktelektroden dieser Addierstufe (31) ist.

4. Decoder nach Anspruch 1, dadurch gekennzeichnet, daß als Abtastfrequenz der Ladungsverschiebeschaltung die halbe Farbträgerfrequenz verwendet ist.

5. Decoder nach Anspruch 1, dadurch gekennzeichnet, daß jeweils die Ausgangselektrode (4) des Demodulators und die Ausgangselektrode (8) der Verzögerungsleitung zu beiden Seiten einer Elektrode (9) liegen, die die Ausgangselektrode der Addierstufe (35) bildet.

6. Decoder nach Anspruch 5, dadurch gekennzeichnet, daß jeweils die Vielzahl der die Verzögerungsleitung bildenden Elektroden (6) entlang eines zum Ausgangspunkt zurückkehrenden Weges (7) angeordnet ist, derart, daß Eingangs- und Ausgangselektrode einer Verzögerungsleitung eng nebeneinander liegen.

7. Decoder nach Anspruch 5, dadurch gekennzeichnet, daß die Ausgangselektroden (9, 18, 16) der Addierstufen für das (R-Y)-Signal, das (B-Y)-Signal und das (G-Y)-Signal in einer Reihe angeordnet sind.

8. Decoder nach Anspruch 7, dadurch gekennzeichnet, daß die Ausgangselektrode (18) für das (G-Y)-Signal zwischen den beiden anderen Ausgangselektroden (5, 16) liegt.

9. Decoder nach Anspruch 5, dadurch gekennzeichnet, daß das (G-Y)'-Signal durch Addition der vier Signale an den Eingängen und Ausgängen der beiden Verzögerungsleitungen gewonnen ist (Fig. 3).

10. Decoder nach Anspruch 9, dadurch gekennzeichnet, daß zu beiden Seiten der Ausgangselektrode (18) der Addierstufe für das (G-Y)'-Signal jeweils ein Teil der Ausgangselektrode (4) des (R-Y)-Demodulators, der Ausgangselektrode (8) der (R-Y)-Verzögerungsleitung, der Ausgangselektrode (19) des (B-Y)-Demodulators und der Ausgangselektrode (28) der (B-Y)-Verzögerungsleitung liegt.

11. Decoder nach Anspruch 5, dadurch gekennzeichnet, daß eine den modulierten Farbträger (F) führende erste Elektrode (3), eine den Ausgang des Demodulators bildende zweite Elektrode (4, 19) und eine den Eingang der Verzögerungsleitung bildende dritte Elektrode (5, 26) unmittelbar benachbart liegen.

12. Decoder nach Anspruch 11, dadurch gekennzeichnet, daß die Zeitpunkte (a, b) der Ladungsverschiebung von der ersten zur zweiten Elektrode bei den beiden Demodulatoren um einen Zeitraum von 90° der Farbträgerperiode gegeneinander versetzt und bei dem (R-Y)-Demodulator von Zeile zu Zeile um 180° der Farbträgerperiode geändert sind.

13. Decoder nach Anspruch 10, dadurch gekennzeichnet, daß die Ladungsverschiebung von der zweiten (4, 19) zur dritten Elektrode (5, 26) für beide Demodulatoren gleichzeitig (c) nach der letzten Ladungsverschiebung (a) von der ersten Elektrode (3) zur zweiten Elektrode (4, 19) erfolgt.

14. Decoder nach Anspruch 11, dadurch gekennzeichnet, daß der zeitliche Abstand zwischen den Ladungsverschiebungen von einer Elektrode zur nächsten etwa gleich der Dauer einer Viertel Farbträgerperiode oder eines ganzzahligen Vielfachen davon ist.

15. Decoder nach Anspruch 11, dadurch gekennzeichnet, daß jeweils individuell in einem Signalweg auf die Ladungsverschiebung (b', b, a) von der ersten Elektrode (3) zur zweiten Elektrode (4, 19) die Ladungsverschiebung von der zweiten zur dritten Elektrode (5, 26) unmittelbar nach einer möglichst kurzen Zeit folgt (Fig. 6).

16. Decoder nach Anspruch 15, dadurch gekennzeichnet, daß die möglichst kurze Zeit etwa 90° der Farbträgerperiode (56 ns, 17,6 MHz Taktfrequenz) beträgt (Fig. 6).


## Claims

1. Colour decoder for a PAL or SECAM television receiver, in which the colour signals (B-Y, R-Y) obtained in demodulators (12, 22) from the modulated colour carrier (F) are delayed by one line period by delay lines (13, 23) formed as charge displacement circuitry and from the delayed and undelayed signals colour difference signals [(B-Y)', (R-Y)'] are obtained in adding stages (14, 24) acting as a matrix, in which the delay lines (13, 23), the demodulators (12, 22) and the adding stages (14, 24) are formed by integrated technology on a semi-conductor chip, characterised in that apart from the delay lines (13, 23), the synchronous demodulators (12, 22) and the adding stages (14, 24) are also formed as charge diplacement circuitry, in that for the synchronous demodulation (12, 22) at defined equi-distant points in time (a, b) the charge of the modulated colour carrier (F) is sampled and is displaced from one electrode (3) to two other electrodes (4, 19) (Fig. 4), so that a charge appears under the respective second electrode corresponding to the (R-Y)- or the (B-Y)-signal, and in that for the addition both the signals are led to two separate electrodes (61, 62) and are displaced from these electrodes to a common third electrode (70) (Fig. 2).

2. Decoder according to claim 1, characterised in that the charge displacement circuitry is formed by CCD technology as a unit, in which the respective input electrode of the two adding stages (14, 24) is split up into two electrodes (61, 62) of equal size for the input of the respective undelayed and delayed signals (B-Y) or (R-Y) and for the input of the colour difference signals (B-Y) and (R-Y) in a predetermined ratio, the input electrode of the third adding stage (31) acting as a (G-Y)-Matrix is split up into two electrodes (81, 82) with sizes corresponding to the predetermined ratio.

3. Decoder according to claim 2, characterised in that the lengths of the split input electrodes of the third adding stage (31) are in the ratio 11/59 to 30/59 and their separation is 18/59 of the lengths of the remaining pulse electrodes of the adding stage (31).

4. Decoder according to claim 1, characterised in that the sampling frequency of the charge displacement circuitry is half the colour carrier frequency.

5. Decoder according to claim 1, characterised in that in each case the output electrode (4) of the demodulator and the output electrode (8) of the delay line lie on both sides of an electrode (9) which forms the output electrode of the adding stage (35).

6. Decoder according to claim 5, characterised in that each case the plurality of electrodes (6) forming the delay line are arranged along a path (7) leading back to the output point so that the input and output electrodes of a delay line lie closely adjacent to each other.

7. Decoder according to claim 5, characterised in that the output electrodes (9, 18, 16) of the adding stages for the (R-Y)-signal, the (B-Y)-signal and the (G-Y)-signal are arranged in a row.

8. Decoder according to claim 7, characterised in that the output electrode (18) for the (G-Y) signal lies between the two other output electrodes (5, 16).

9. Decoder according to claim 5, characterised in that the (G-Y)'-signal is obtained by the addition of the four signals at the inputs and outputs of the two delay lines (Fig. 3).

10. Decoder according to claim 9, characterised in that lying on both sides of the output electrode (18) of the adding stage for the (G-Y)'-signal there is a part of, respectively, the output electrode (4) of the (R-Y)-demodulator, the output electrode (8) of the (R-Y) delay line, the output electrode (19) of the (B-Y)-demodulator and the output electrode (28) of the (B-Y) delay line.

11. Decoder according to claim 5, characterised in that a first electrode (3) carrying the modulated colour carrier (F), a second electrode (4, 19) forming the output of the demodulator and a third electrode (5, 26) forming the input of the delay line lie directly adjacent.

12. Decoder according to claim 11, characterised in that the points in time (a, b) of charge displacement from the first to the second electrode in both the demodulators are staggered by an interval of 90° of the colour carrier period and are changed in the (R-Y)-demodulator from line to line by 180° of the colour carrier period.

13. Decoder according to claim 10, characterised in that the charge displacement from the second (4, 19) to the third electrode (5, 26) occurs simultaneously (c) for both demodulators after the last charge displacement (a) from the first electrode (3) to the second electrode (4, 19).

14. Decoder according to claim 11, characterised in that the time interval between the charge diplacements from one electrode to the next is approximately same as the duration of a quarter of the colour carrier period or a multiple thereof.

15. Decoder according to claim 11, characterised in that, in each individual signal path, upon the charge displacement (b', b, a) from the first electrode (3) to the second electrode (4, 19), the charge displacement from the second to the third electrode (5, 26) follows directly after the shortest time possible (Fig. 6).

16. Decoder according to claim 15, characterised in that said shortest time possible amounts to approximately 90° of the colour carrier period (56 ns, 17.6 MHz pulse frequency) (Fig. 6).

**Revendications**

1. Décodeur pour téléviseur couleur PAL ou SECAM, dans lequel les signaux de chrominance (B-Y), (R-Y), obtenus dans les démodulateurs (12, 22) à partir de la sous-porteuse de chrominance (F), sont retardés de la durée d'une ligne par des lignes de retard (13, 23) réalisées sous forme d'un circuit à transfert de charge; des étages additionneurs (14, 24), fonctionnant en matrice produisent les signaux de différence de chrominance [(B-Y)', (R-Y)']; et les lignes de retard (13, 23), les démodulateurs (12, 22) et les étages additionneurs (14, 24) sont réalisés par intégration dans une plaquette semiconductrice, ledit décodeur étant caractérisé en ce qu'outre les lignes de retard (13, 23), les démodulateurs synchrones (12, 22) et les étages additionneurs (14, 24) sont réalisés sous forme d'un circuit à transfert de charge; pour la démodulation synchrone (12, 22), la charge de la sous-porteuse de chrominance modulée (F) à des instants équidistants définis (a, b), puis transférée par une électrode (3) à deux autres électrodes (4, 19) (figure 4), de sorte qu'une charge correspondant au signal (R-Y) ou (B-Y) apparaît sous la seconde électrode (4, 19) correspondante; et pour l'addition, les deux signaux sont appliqués à deux électrodes séparées (61, 62), qui les transfèrent à une troisième électrode commune (70) (figure 2).

2. Décodeur selon revendication 1, caractérisé en ce que le circuit de transfert de charge est réalisé en technique CCD sous forme d'une unité, l'électrode d'entrée des deux étages additionneurs (14, 24) étant divisée en deux électrodes (61, 62) de même taille pour l'entrée dans le même rapport des signaux (B-Y) ou (R-Y) retardé et nonretardé, et l'électrode d'entrée du troisième étage additionneur (31) servant de matrice (V-Y) étant divisée en deux électrodes (81, 82) de taille correspondant au rapport prédéterminé pour l'entrée des signaux de différence de chrominance (B-Y) et (R-Y).

3. Décodeur selon revendication 2, caractérisé en ce que la longueur des électrodes d'entrée divisées du troisième étage additionneur (31) est dans le rapport de 11/59 à 30/59, et leur distance est de 18/59 de la longueur des autres électrodes d'horloge de cet étage additionneur (31).

4. Décodeur selon revendication 1, caractérisé par l'emploi de la demi-fréquence de la sous-porteuse de chrominance comme fréquence d'échantillonnage du circuit à transfert de charge.

5. Décodeur selon revendication 1, caractérisé en ce que l'électrode de sortie (4) du démodulateur et l'électrode de sortie (8) de la ligne de retard sont disposées de part et d'autre d'une électrode (9) formant l'électrode de sortie de l'étage additionneur (35).

6. Décodeur selon revendication 5, caractérisé en ce que les multiples électrodes (6) constituant la ligne de retard sont disposées le long d'un trajet (7) revenant au point de départ, de façon que les électrodes d'entrée et de sortie d'une ligne de retard se trouvent côte à côte.

7. Décodeur selon revendication 5, caractérisé en ce que les électrodes de sortie (9, 18, 16) des étages additionneurs du signal (R-Y), du signal (B-Y) et du signal (V-Y) sont disposées successivement.

8. Décodeur selon revendication 7, caractérisé en ce que l'électrode de sortie (18) du signal (V-Y) est disposée entre les deux autres électrodes de sortie (5, 16).

9. Décodeur selon revendication 5, caractérisé en ce que le signal (V-Y)' est obtenu par addition des quatre signaux apparaissant sur les entrées et sorties des deux lignes de retard (figure 3).

9

10. Décodeur selon revendication 9, caractérisé en ce que de part et d'autre de l'électrode de sortie (18) de l'étage additionneur du signal (V-Y)' se trouvent une partie de l'électrode de sortie (4) du démodulateur (R-Y), une partie de l'électrode de sortie (8) de la ligne de retard (R-Y), une partie de l'électrode de sortie (19) du démodulateur (B-Y) et une partie de l'électrode de sortie (28) de la ligne de retard (B-Y).

11. Décodeur selon revendication 5, caractérisé en ce qu'une première électrode (3) recevant la sous-porteuse de chrominance modulée (F), une seconde électrode (4, 19) formant la sortie du démodulateur et une troisième électrode (5, 26) formant l'entrée de la ligne de retard sont disposées côte à côte.

12. Décodeur selon revendication 11, caractérisé en ce que les instants (a, b) du transfert de charge de la première vers la seconde électrode sont décalés dans le temps de 90° de la période de la sous-porteuse de chrominance, dans les deux démodulateurs, et modifiés de 180° de la période de la sous-porteuse de chrominance à chaque ligne, dans le démodulateur (R-Y).

13. Décodeur selon revendication 10, caractérisé en ce que le transfert de charge entre la seconde (4, 19) et la troisième électrode (5, 26) des deux démodulateurs s'effectue simultanément (c) après le dernier transfert de charge (a) de la première électrode (3) à la seconde (4, 19).

14. Décodeur selon revendication 11, caractérisé en ce que l'intervalle de temps entre les transfert de charge d'une électrode à la suivante est sensiblement égal à la durée d'une demi-alternance de la sous-porteuse de chrominance ou d'un multiple entier de cette dernière.

15. Décodeur selon revendication 11, caractérisé en ce que sur le trajet d'un signal, le transfert de charge entre la seconde et la troisième électrode (5, 26) s'effectue au bout d'un temps aussi court que possible après le transfert de charge (b', b, a) de la première électrode (3) vers la seconde (4, 19) (figure 6).

16. Décodeur selon revendication 15, caractérisé en ce que le temps aussi court que possible est d'environ 90° de la période de la sous-porteuse de chrominance (56 ns, fréquence d'horloge: 17,6 MHz) (figure 6).

Fig.1

*Fig.2*

*Fig.3*

Fig. 4

Fig. 5

Fig. 6

d          b      c        d

113 ns
8,8 MHz

Fig. 7

d          a · c       d

56
ns
17,6 MHz

Fig. 8

d     b'  c'  b  c"      d

56ns
17,6 MHz

a   c

Fig. 9